Europäisches Patentamt

European Patent Office

Office européen des brevets

(19)

(11) Veröffentlichungsnummer: **0 060 377**
A2

(12) **EUROPÄISCHE PATENTANMELDUNG**

(21) Anmeldenummer: 82100207.8

(22) Anmeldetag: 14.01.82

(51) Int. Cl.³: **B 30 B 5/02,** G 02 F 1/133, B 29 D 9/04

(30) Priorität: 14.03.81 DE 3109994

(43) Veröffentlichungstag der Anmeldung: 22.09.82 Patentblatt 82/38

(84) Benannte Vertragsstaaten: **CH FR GB LI NL**

(71) Anmelder: **VDO Adolf Schindling AG, Gräfstrasse 103, D-6000 Frankfurt/Main (DE)**

(72) Erfinder: **Baeger, Holm, Dr., Salzbornstrasse 1, D-6231 Schwalbach (DE)**

(74) Vertreter: **Könekamp, Herbert, Dipl.-Ing., Sodener Strasse 9, D-6231 Schwalbach (DE)**

(54) Vorrichtung zum Aufeinanderpressen zweier Substrate.

(57) Die Erfindung bezieht sich auf eine Vorrichtung zum Aufeinanderpressen zweier Substrate (9, 10), insbesondere zweier plattenförmiger Substrate einer Flüssigkristallzelle, wobei das eine Substrat von einem Druck beaufschlagbar und auf das andere Substrat preßbar ist. Um bei einfacher Arbeitsweise Beschädigungen der Substrate (9, 10) zu vermeiden, besitzt die Vorrichtung zwei zueinander etwa parallele Wände (1, 3, 11), zwischen die beide Substrate (9, 10) aufeinanderliegend legbar sind. Dabei ist eine Wand (3, 11) elastisch verformbar und auf ihrer den Substraten (9, 10) abgewandten Seite von einem pneumatischen oder hydraulischen Druck beaufschlagbar, der grösser ist als der auf der Seite der Substrate (9, 10) herrschende Druck.

EP 0 060 377 A2

VDO Adolf Schindling AG     - 1 -      Gräfstraße 103
6000 Frankfurt/Main 90

G-S Kl-do
1574
27.Februar 1981

## Vorrichtung zum Aufeinanderpressen zweier Substrate

Die Erfindung bezieht sich auf eine Vorrichtung zum Aufeinanderpressen zweier Substrate, insbesondere zweier plattenförmiger Substrate einer Flüssigkristallzelle, wobei das eine Substrat von einem Druck beaufschlagbar und auf das andere Substrat pressbar ist.

Um Flüssigkristallzellen herzustellen wird im Randbereich eines Substrats umlaufend Versiegelungsmaterial sowie meist im Versiegelungsmaterial enthaltene Abstandshalter aufgebracht. Danach wird das andere Substrat daraufgelegt und in einer Vorrichtung,wie sie eingangs beschrieben ist beide Substrate aufeinandergepresst. Dieses Aufeinanderpressen erfolgt meist unter Erwärmung der Substrate und des Versiegelungsmaterials.

Zum Aufeinanderpressen der Substrate ist eine Vorrichtung bekannt, die eine Grundplatte besitzt, an der schwenkbar eine federbelastete Pressplatte angeordnet ist. Die aufeinanderliegenden Substrate werden dabei zwischen die Grundplatte und die federbelastete Pressplatte gelegt. Durch die Federbelastung wird das obere Substrat  druckbeaufschlagt und auf das untere Substrat gepresst.

Diese Vorrichtung hat den Nachteil, daß die Druckbelastung der Substrate durch die Pressplatte nicht gleichmäßig über die ganze Fläche der Substrate erfolgt, sondern meist nur an einer Stelle des oberen Substrats angreift. Diese Belastung führt insbesondere bei großflächigen Substraten zu Beschädigungen.

Es ist daher Aufgabe der Erfindung eine Vorrichtung nach dem Oberbegriff zu schaffen, die bei einfacher Arbeitsweise Beschädigungen der Substrate vermeidet.

Diese Aufgabe wird erfindungsgemäß dadurch gelöst, daß die Vorrichtung zwei zueinander etwa parallele Wände besitzt, zwischen die beide Substrate aufeinanderliegend legbar sind, wobei eine Wand elastisch verformbar und auf ihrerden Substraten abgewandten Seite von einem pneumatischen oder hydraulischen Druck beaufschlagbar ist, der größer ist als der auf der Seite der Substrate herrschende Druck. Durch die Druckbeaufschlagung der elastisch verformbaren Wand, die folienartig ausgebildet sein kann, legt diese sich entsprechend der Kontur auf die Substrate, so daß diese über ihre gesamte Fläche gleichmäßig druckbelastet werden. Eine Beschädigung selbst großflächiger Substrate wird damit weitgehend vermieden.

Ohne die Vorrichtung zu ändern, kann diesefür eine Vielzahl Flüssigkristallzellen von in der Fläche und in der Dicke unterschiedlicher Größe benutzt werden. Eine besonders günstige Arbeitsweise ergibt sich, wenn die Wände an einer Seitenkante durch ein Scharnier verbunden sind. Damit kann die eine Wand zum Einlegen der Substrate von der anderen Wand weggeklappt und nach dem Einlegen die Substrate überdeckend wieder in die exakte Lage daraufgeklappt werden. Vorzugsweise sind dabei die Wände durch einen oder mehrere lösbare Verschlüsse in ihrem Randbereich aufeinander pressbar, wobei der lösbare Verschluß vorzugsweise eine Spannklammer ist. Auf diese Weise können sich die beiden Wände bei der Druckbeaufschlagung nicht voneinander wegbewegen.

Um der an sich instabilen elastisch verformbaren Wand eine gewisse Stabilität zu geben und sie damit leichter handhabbar zu machen, kann sie an ihrem umlaufenden Rand einen starren Rahmen besitzen.

Eine besonders einfache Arbeitsweise ist möglich, wenn die beiden Wände eine dicht abgeschlossene Kammer bilden, die von einem Unterdruck beaufschlagbar ist, während die Außenseite der elastisch verformbaren Wand von Atmosphärendruck beaufschlagt ist. Es braucht dabei nach dem Einlegen der Substrate nur die in der Kammer enthaltene Luft abgesaugt und damit der Unterdruck hergestellt zu werden. Damit es dabei nicht zu einem Kurzschluß zwischen der Kammer und der Atmosphäre kommt, kann im Randbereich zwischen den beiden Wänden eine umlaufende Dichtung angeordnet sein, die vorzugsweise ein O-Ring ist.

Soll gleichzeitig mit der Druckbeaufschlagung der Substrate das Versiegelungsmaterial geschmolzen werden, kann eine der Wände heizbar sein. Ist dabei z.B. eine Wand durch eine starre Grundplatte gebildet, so kann in der Grundplatte z.B. durch eine Heizschlange eine Heizung angeordnet sein.

Zum einfachen Herstellen eines Unterdrucks in der Kammer kann in der Grundplatte oder dem Rahmen ein in die Kammer mündender Sauganschluß ausgebildet sein, der mit dem Saugstutzen einer Unterdruckpumpe verbindbar ist.

Weiterhin kann die Grundplatte kammerseitig um geringere Höhe als der Dicke der aufeinanderliegenden Substrate hervorstehende, die Lage der Substrate definierende Justiernocken aufweisen. Dies ermöglicht die Substrate in der richtigen Lage zueinander zu halten. Eine Verschiebung der Substrate während der Druckbeaufschlagung ist damit vermieden. Diese Justiernocken können auch als in Bohrungen der Grundplatte einsetzbare Zapfen ausgebildet sein, so daß durch die unterschiedliche Anordnung der Zapfen in verschiedenen Bohrungen eine Verstellung auf verschieden große Flüssigkristallzellen möglich ist.

In einer weiteren vorteilhaften Ausbildung der Erfindung können beide Wände elastisch verformbar sein. Diese Ausführungsform hat den Vorteil, daß Fremdkörper wie z.B. Glassplitter, die sich zwischen einer Wand und einem Substrat befinden, nicht zu einer Beschädigung der Substrate führen, da sich die elastischen Wände auch der Form der Fremdkörper anpassen.

Ausführungsbeispiele der Erfindung sind in der Zeichnung dargestellt und werden im folgenden näher beschrieben. Es zeigen

Figur 1 ein erstes Ausführungsbeispiel einer erfindungsgemäßen Vorrichtung in aufgeklappter Stellung in Schnittansicht

Figur 2 die Vorrichtung nach Figur 1 in geschlossener Stellung in Schnittansicht

Figur 3 die Vorrichtung nach Figur 1 in Presstellung in Schnittansicht

Figur 4 ein zweites Ausführungsbeispiel der Erfindung in Presstellung in Schnittansicht

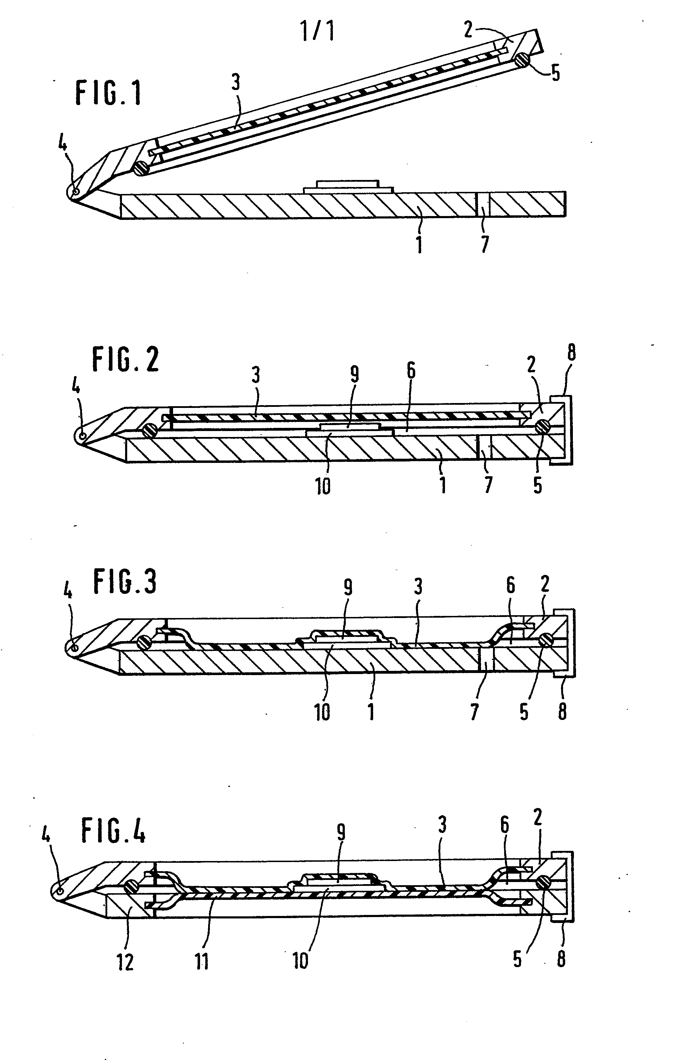

Die in den Figuren 1 bis 3 dargestellten Vorrichtungen besitzen eine Grundplatte 1,deren Seitenkante mit der Seitenkante eines Rahmens 2 einer elastisch verformbaren Wand 3 über ein Scharnier 4 verbunden ist.

Die elastisch verformbare Wand 3 kann so auf die Grundplatte 1 verschwenkt werden, daß sie etwa parallel zur Grundplatte 1 ist. In dieser Stellung liegt der Rahmen 2 über einen an ihm umlaufend angeordneten O-Ring 5 derart auf der Grundplatte 1 auf, daß zwischen der Wand 3 und der Grundplatte 1 eine nach außen hin dicht abgeschlossene Kammer 6 gebildet ist.

In die Kammer 6 mündet ein Sauganschluß 7, der mit einem Saugstutzen einer nicht dargestellten Unterdruckpumpe verbindbar ist.

Damit die Kammer 6 sicher verschlossen ist, ist wie in den Figuren 2 und 3 zu sehen, eine den Randbereich von Grundplatte 1 und Rahmen 2 umgreifende Spannklammer 8 auf der dem Scharnier 4 gegenüberliegenden Seite angeordnet.

Die Wand 3 besteht aus einer dünnen Folie, die derart elastisch ist, daß sie sich wie in Figur 3 dargestellt, bei Unterdruck in der Kammer 6 an die auf der Grundplatte 1 aufliegenden Substrate 9 und 10 anschmiegt.

Die in Figur 4 dargestellte Vorrichtung besitzt die gleiche mit einem Rahmen 2 versehene elastische Wand 3 wie das Ausführungsbeispiel der Figuren 1 bis 3. Unterschiedlich ist nur, daß keine Grundplatte vorhanden ist, sondern eine zweite,der elastischen Wand 3 entsprechende elastische Wand 11 mit einem Rahmen 12.

Auch die zwischen den beiden elastischen Wänden 3 und 11 gebildete Kammer 6 kann über einen nicht dargestellten,in einem der Rahmen 2 und 12 ausgebildeten Sauganschluß an den Saugstutzen einer nicht dargestellten Unterdruckpumpe angeschlossen werden. Die Funktion der beiden Ausführungsbeispiele ist wie folgt.

In die durch Aufklappen der Wand 3 geöffnete Kammer 6 (Figur 1) werden die Substrate 9 und 10 aufeinanderliegend eingelegt, nachdem zwischen die sich überdeckenden Randbereiche der Substrate 9 und 10 umlaufend Versiegelungsmaterial aufgebracht sowie Abstandshalter zwischen den Substraten 9 und 10 angeordnet sind.

Entsprechend Figur 2 wird die Kammer 6 geschlossen und durch die Spannklammer 8 verriegelt.

Wie in den Figuren 3 und 4 wird nun die Kammer 6 von der Unterdruckpumpe leergepumpt, so daß in der Kammer 6 ein Unterdruck entsteht. Dadurch legen sich die elastischen Wände 3 und 11 an den Substraten 9 und 10 an und pressen diese aufgrund des von außen wirkenden Atmosphärendrucks aufeinander. Da sich die elastischen Wände 3 und 11 der Kontur der Substrate 9 und 10 anpassen, wird eine völlig gleiche Druckbelastung an allen Stellen der Substrate 9 und 10 erreicht, so daß an diesen keine Beschädigung eintreten kann. Durch die einfache Handhabung der Beschickung der Vorrichtung und des Pressvorgangs können trotzdem hohe Stückzahlen pro Zeiteinheit produziert werden. Diese Stückzahlen sind noch zu erhöhen, wenn statt einem mehrere Substratpaare in die Kammer eingelegt werden.

Die erfindungsgemäße Vorrichtung ist aber nicht nur für ebene Substrate geeignet, sondern kann gleichermaßen vorteilhaft auch bei Substraten angewandt werden, von denen ein oder beide Substrate von der ebenen Plattenform abweichen. Haben beide Substrate eine von der ebenen Plattenform abweichende Konfiguration, so ist die Vorrichtung mit zwei elastisch verformbaren Wänden zu verwenden. Diese elastisch verformbaren Wände passen sich der Form der Substrate an und ermöglichen so eine völlig gleichmäßige Druckbelastung beim Zusammenpressen.

Besteht eine der Wände, vorzugsweise eine der elastisch verformbaren Wände, aus einem lichtdurchlässigen Werkstoff, so kann ein Versiegelungsmaterial verwandt werden, das durch Bestrahlung z.B. von UV-Licht härtbar ist. Auf einfache Weise kann damit im zusammengepreßten Zustand der Substrate das Versiegelungsmaterial durch Bestrahlung von außen ausgehärtet werden.

VDO Adolf Schindling AG     - 1 -          Gräfstraße 103
                                           6000 Frankfurt/Main 90

                                           G-S Kl-do
                                           1574
                                           27.Februar 1981


Patentansprüche


1. Vorrichtung zum Aufeinderpressen zweier Substrate, insbesondere zweier plattenförmiger Substrate einer Flüssigkristallzelle, wobei das eine Substrat von einem Druck beaufschlagbar und auf das andere Substrat pressbar ist, dadurch gekennzeichnet, daß die Vorrichtung zwei zueinander
   etwa parallele Wände (1, 3, 11) besitzt, zwischen die beide Substrate (9, 10) aufeinanderliegend legbar sind, wobei
   eine Wand (3, 11) elastisch verformbar und auf ihrer den
   Substraten (9, 10) abgewandten Seite von einem pneumatischen
   oder hydraulischen Druck beaufschlagbar ist, der größer ist
   als der auf der Seite der Substrate (9, 10) herrschende
   Druck.


2. Vorrichtung nach Anspruch 1, dadurch gekennzeichnet, daß
   die Wände (1, 3, 11) an einer Seitenkante durch ein Scharnier (4) verbunden sind.


3. Vorrichtung nach einem der vorhergehenden Ansprüche, dadurch gekennzeichnet, daß die Wände (1, 3,11) durch einen
   oder mehrere lösbare Verschlüsse in ihrem Randbereich aufeinander pressbar sind.

- 2 -

0060377

4. Vorrichtung nach Anspruch 3, *dadurch gekennzeichnet*, daß der lösbare Verschluß eine Spannklammer (8) ist.

5. Vorrichtung nach einem der vorhergehenden Ansprüche, *dadurch gekennzeichnet*, daß die elastisch verformbare Wand (3, 11) an ihrem umlaufenden Rand einen starren Rahmen (2, 12) besitzt.

6. Vorrichtung nach einem der vorhergehenden Ansprüche, *dadurch gekennzeichnet*, daß die beiden Wände (1, 3, 11) eine dicht abgeschlossene Kammer (6) bilden, die von einem Unterdruck beaufschlagbar ist, während die Außenseite der elastisch verformbaren Wand (3, 11) von Atmosphärendruck beaufschlagbar ist.

7. Vorrichtung nach Anspruch 6, *dadurch gekennzeichnet*, daß im Randbereich zwischen den beiden Wänden eine umlaufende Dichtung angeordnet ist.

8. Vorrichtung nach Anspruch 7, *dadurch gekennzeichnet*, daß die Dichtung ein O-Ring (5) ist.

9. Vorrichtung nach einem der vorhergehenden Ansprüche, *dadurch gekennzeichnet*, daß eine der Wände heizbar ist.

10. Vorrichtung nach einem der vorhergehenden Ansprüche, *dadurch gekennzeichnet*, daß eine Wand eine starre Grundplatte (1) bildet.

11. Vorrichtung nach Anspruch 10, *dadurch gekennzeichnet*, daß in der Grundplatte (1) oder den Rahmen (2, 12) ein in die Kammer (6) mündender Sauganschluß (7) ausgebildet ist, der mit dem Saugstutzen einer Unterdruckpumpe verbindbar ist.

0060377

12. Vorrichtung nach Anspruch 10, <u>dadurch gekennzeichnet</u>, daß die Grundplatte (1) kammerseitig um geringere Höhe als der Dicke der aufeinanderliegenden Substrate hervorstehende, die Lage der Substrate definierende Justiernocken aufweist.

13. Vorrichtung nach einem der Ansprüche 1 bis 9, <u>dadurch gekennzeichnet</u>, daß beide Wände (3, 11) elastisch verformbar sind.

14. Vorrichtung nach einem der vorhergehenden Ansprüche, <u>dadurch gekennzeichnet</u>, daß eine der Wände (1, 3, 11) aus einem lichtdurchlässigen Werkstoff besteht.

1/1

0060377

FIG.1

FIG.2

FIG.3

FIG.4